# EUROPEAN PATENT SPECIFICATION

(11) **EP 2 690 692 B1**
(45) Date of publication and mention of the grant of the patent: **23.05.2018**
(21) Application number: 12764072.0
(22) Date of filing: 21.03.2012
(51) Int. Cl.: H01M 4/90, B01J 23/46, B01J 23/62, B01J 37/18, B82Y 30/00, H01M 8/10, H01M 4/92, B01J 37/08, B01J 35/00, B01J 23/42

(54) **FUEL CELL ANODE CATALYST AND MANUFACTURING METHOD THEREFOR**
BRENNSTOFFZELLENANODENKATALYSATOR UND VERFAHREN ZU SEINER HERSTELLUNG
CATALYSEUR POUR ANODE DE CELLULE À COMBUSTIBLE ET SON PROCÉDÉ DE FABRICATION

(30) Priority: 25.03.2011 JP 2011068296
(43) Date of publication of application: 29.01.2014
(73) Proprietor: National University Corporation Hokkaido University, Sapporo-shi, Hokkaido 060-0808 (JP)
(72) Inventor: TAKEGUCHI, Tatsuya, Hokkaido 060-0808 (JP); ASAKURA, Kiyotaka, Hokkaido 060-0808 (JP)
(74) Representative: Godemeyer Blum Lenze Patentanwälte Partnerschaft mbB - werkpatent
(86) International application number: PCT/JP2012/057109
(87) International publication number: WO 2012/133017

(56) References cited:
- JP-A- H01 227 361
- JP-A- 2005 177 661
- JP-A- 2006 190 686
- JP-A- 2008 506 513
- JP-A- 2010 140 767
- JP-A- 2011 044 334
- US-A1- 2003 104 936
- US-A1- 2006 147 788
- US-A1- 2010 190 641
- US-A1- 2011 065 025
- TOSHIRO YAMANAKA ET AL. KOTAI KOBUNSHIKEI NENRYO DENCHI-YO PTRU ANODE SHOKUBAI ENO KINZOKU SANKABUTSU TENKA TO CO TAISEI vol. 76TH, 29 March 2009, page 409, XP008171763

## Description

### [Cross-reference to related patent application]

The present application claims priority under Japanese Patent Application 2011-68296, filed on March 25, 2011.

### [Technical Field]

The present invention relates to a catalyst for anode for fuel cell (hereinafter a fuel cell anode catalyst) and to a method for manufacturing the same. The present invention further relates to a fuel cell anode employing this catalyst, a fuel cell membrane electrode assembly employing this anode, and a fuel cell employing this fuel cell membrane electrode assembly.

### [Background Art]

### [Background Technology]

Solid polymer fuel cells can achieve higher energy efficiency than conventional power generating techniques. As a result, their practical application as a power generation source with a low environmental load is anticipated. When hydrogen is supplied to the anode (fuel electrode) of a solid polymer fuel cell and air is supplied to the cathode (air electrode), the reactions proceed below. Through the action of the anode catalyst, hydrogen ions (protons) are produced at the fuel electrode. Protons passing through the electrolyte membrane bond with oxygen, producing water at the air electrode.

Fuel electrode: H₂ → 2H⁺ + 2e⁻
Air electrode: 1/2O₂ + 2H⁺ + 2e⁻ → H₂O

The hydrogen serving as fuel is often produced by modifying natural gas with steam. In this method, the hydrogen that is produced contains trace quantities of carbon monoxide (CO). The CO is known to adsorb to the anode catalyst, reducing catalytic activity. Thus, various setups have been devised to develop an anode catalyst with high CO tolerance.

Among the catalysts developed thus far, catalysts in which platinum and ruthenium are supported on carbon microparticles (PtRu/C catalysts) are known to afford the greatest CO tolerance (see Patent References 1 to 5 and Nonpatent Reference 1). Patent References 1, 2, and 3 describe methods of manufacturing alloy catalysts by alloying Pt and Ru by means of heat treatments. Patent References 1 and 3 and Nonpatent Reference 1 describe the good CO tolerance of catalysts in which prescribed proportions of Pt and Ru are supported on supports. Patent References 1 to 3 are patent references belonging to a single family. Patent Reference 4 describes the fact that a catalyst in which an alloy of Pt and Ru with a particle size of from 0.5 nm to less than 2.0 nm is supported on a support affords good CO tolerance. Patent Reference 5 describes the fact that a catalyst in which Pt with a particle size of less than 2 nm and Ru with a particle size of less than 1 nm are supported on a support affords good CO tolerance.

Patent Reference 1: WO99/66576
Patent Reference 2: Japanese Patent No. 3839961
Patent Reference 3: US Patent No. 6,339,038
Patent Reference 4: US Patent No. 6,066,410
Patent Reference 5: US Patent No. 6,007,934
Nonpatent Reference 1: Tada et al., "The Effect of the Composition Ratio of Thermal Diffusion Platinum-Ruthenium Alloy Catalysts on Carbon Monoxide Poisoning Tolerance Characteristics", J. Electrochem. Soc. Japan, 2008, 76, No. 11, pp. 813-.

### [Summary of the Invention]

However, the conventional PtRu/C catalysts described in the above-cited patent and nonpatent references do not yet afford adequate CO tolerance. Still greater CO tolerance is required for their practical application to solid polymer fuel cells. The present invention, devised in light of the above situation, has for its object to provide a PtRu/C catalyst having better CO tolerance than conventional PtRu/C catalysts, and a method for manufacturing the same.

The present inventors conducted extensive research into the conditions and methods used to manufacture PtRu/C catalysts. They discovered that by processing a C material supporting a Pt compound and a Ru compound by a specific method and under specific conditions, it was possible to obtain a fuel cell anode catalyst with markedly enhanced CO tolerance; the present invention was devised on that basis.

The present invention is as set forth below:
[1] A fuel cell anode catalyst in which a platinum and ruthenium alloy is supported on a carbon material, such that the molar ratio of platinum to ruthenium (Pt:Ru) in the alloy falls within a range of from 1:1 to 1:5; when the numbers of Pt atom coordination sites and the number of Ru atom coordination sites of the atom sites in the alloy, as measured by means of the X-ray absorption fine structure, are denoted as N(Pt) and N(Ru), respectively, N(Ru)/(N(Pt)+N(Ru)) at platinum sites falls within a range of 0.8 to 1.1 times the theoretical value, and N(Pt)/(N(Ru)+N(Pt)) at Ru sites falls within a range of 0.8 to 1.1 times the theoretical value; the average particle diameter of the alloy falls within a range of 1 to 5 nm; and the standard deviation in the particle diameter falls within a range of 2 nm and below.
[2] The catalyst according to [1], wherein a metal oxide with an average particle diameter falling within a range of 1 to 5 nm is further supported.
[3] The catalyst according to [2], wherein the metal oxide is tin oxide.
[4] The catalyst according to any one of [1] to [3], wherein the carbon material is comprised of particles having an average particle diameter falling within a range of 10 nm to 10 mm.
[5] The catalyst according to any one of [1] to [4], wherein N(Ru)/(N(Pt)+N(Ru)) at platinum sites falls within a range of 0.9 to 1.1 times the theoretical value and N(Pt)/(N(Ru)+N(Pt)) at Ru sites falls within a range of 0.9 to 1.1 times the theoretical value.
[6] The catalyst according to any one of [1] to [5], wherein the fuel cell is a methanol fuel cell.
[7] A fuel cell anode having a substrate surface comprised of an anode composition containing the catalyst according to any one of [1] to [5] and a proton-conducting polymer.
[8] A fuel cell membrane electrode assembly in which the anode according to [7] and a cathode are laminated with a polymer electrolyte membrane therebetween.
[9] A fuel cell comprising the fuel cell membrane electrode assembly according to [8].
[10] A method for manufacturing the fuel cell anode catalyst according to [1], comprising the steps of:
   (1) causing a platinum compound and a ruthenium compound to be supported on a carbon material;
   (2) placing the carbon material supporting a platinum compound and a ruthenium compound of step (1) in a hydrogen-containing atmosphere;
   (3) heating the carbon material obtained in step (2) in a helium-containing atmosphere; and
   (4) heating the carbon material obtained in step (3) in a hydrogen-containing atmosphere.
[11] The manufacturing method according to [10], further comprising the step of causing the carbon material to support a metal oxide prior to step (1).
[12] The manufacturing method according to [10] or [11], wherein in step (1), the carbon material is caused to support a platinum compound and then caused to support a ruthenium compound.
[13] The manufacturing method according to any one of [10] to [12], wherein the step of placement in a hydrogen-containing atmosphere of step (2) is implemented at a temperature falling within a range of 0 to 50°C for from 0.1 hour to 10 hours.
[14] The manufacturing method according to any one of [10] to [13], wherein the step of heating in a helium-containing atmosphere of step (3) is implemented at a temperature falling within a range of 700 to 1,000°C for from 0.05 to 5 hours.
[15] The manufacturing method according to [14], wherein after heating at a temperature falling within a range of 700 to 1,000°C, cooling is conducted at a cooling rate of from 10 to 200°C/minute until 500°C or lower is reached.
[16] The manufacturing method according to [15], wherein cooling is conducted from 750°C to 500°C at a cooling rate of 10 to 20°C/minute.
[17] The manufacturing method according to any one of [10] to [14], wherein the step of heating under a hydrogen-containing atmosphere of step (4) is implemented at a temperature falling within a range of 70 to 200°C for from 0.2 to 20 hours.

### [Effect of the Invention]

According to the present invention, a fuel cell anode catalyst with markedly enhanced CO tolerance is obtained. The present invention further provides a fuel cell anode employing the above catalyst and having markedly enhanced CO tolerance, a fuel cell membrane electrode assembly employing this anode, and a fuel cell employing this fuel cell membrane electrode assembly.

### [Brief Description of the Drawings]

[Figure 1] The results of measurement of the voltage at a current density of 0.2 A/cm² in fuel cells employing the catalysts of Examples 1, 3, 5, and 6 and Comparative Example 1 as anode catalysts.
[Figure 2] The results of measurement of the "in-situ FTIR" of the PtRu/SnO₂/C catalyst prepared in Example 5 and the Pt₂Ru₃/C catalyst shown in Comparative Example 1.
[Figure 3] The results of measurement of the voltage at a current density of 0.2 A/cm² in fuel cells employing the catalysts of Examples 9 and 10 as anode catalysts.

### [Modes of Carrying Out the Invention]

### [The fuel cell anode catalyst]

The present invention is a fuel cell anode catalyst in which a platinum and ruthenium alloy is supported on a carbon material. In the catalyst, the molar ratio of platinum to ruthenium (Pt:Ru) in the alloy falls within a range of from 1:1 to 1:5; when the numbers of Pt atom coordination sites and the number of Ru atom coordination sites of the atom sites in the alloy, as measured by means of the X-ray absorption fine structure, are denoted as N(Pt) and N(Ru), respectively, N(Ru)/(N(Pt)+N(Ru)) at platinum sites falls within a range of 0.8 to 1.1 times the theoretical value, and N(Pt)/(N(Ru)+N(Pt)) at Ru sites falls within a range of 0.8 to 1.1 times the theoretical value; the average particle diameter of the alloy falls within a range of 1 to 5 nm; and the standard deviation in the particle diameter falls within a range of 2 nm and below.

In the carbon material, since the catalyst of the present invention is employed as catalyst in the fuel cell anode, and since the catalyst is employed as fuel cell anode having a substrate surface in the form of an anode composition layer comprised of a mixture with a proton-conducting polymer, a particulate form is desirable. In the case of a particulate form, for example, the average particle diameter can fall within a range of 10 nm to 10 mm. From the same perspective, the average particle diameter desirably falls within a range of 10 nm to 1,000 nm.

Examples of the carbon material are not specifically limited. Examples are carbon black, activated charcoal, and graphite. The specific surface area of the carbon material, for example, falls within a range of 500 to 3,000 m²/g, desirably 700 to 2,500 m²/g. In addition to the carbon material, materials such as alumina (aluminum oxide), titanium oxide, tin oxide, zirconia (zirconium oxide), ceria (cerium oxide), and ceria-zirconia can be employed as platinum and ruthenium supports. Mixtures of carbon materials and non-carbon materials can be employed as supports.

In the platinum and ruthenium alloy, the molar ratio of platinum to ruthenium (Pt:Ru) falls within a range of from 1:1 to 1:5. When the molar ratio (Pt:Ru) is less than 1:1, the quantity of Ru is small. As a result, there is little bonding of Pt-Ru, and the CO tolerance tends to diminish. When the molar ratio (Pt:Ru) exceeds 1:5, the quantity of Ru is excessively large. As a result, the quantity of Pt at active sites is small and the catalytic effect of Pt tends to decrease. From the perspectives of attaining higher CO tolerance and utilizing the catalytic effect of Pt, the molar ratio of platinum to ruthenium (Pt:Ru) desirably falls within a range of 1:1 to 1:4, preferably within a range of 1:1 to 1:3, and still more preferably, within a range of 1:1 to 1:2.

In the platinum and ruthenium alloy, the N(Ru)/(N(Pt)+N(Ru)) at platinum sites measured by means of the X-ray absorption fine structure (XAFS) falls within a range of 0.8 to 1.1 times the theoretical value. The N(Pt)/(N(Ru)+N(Pt)) at Ru sites falls within a range of 0.8 to 1.1 times the theoretical value. The N(Pt) and N(Ru) that are measured by XAFS indicate the number of Pt atoms and the number of Ru atoms in the alloy. The N(Ru)/(N(Pt)+N(Ru)) at platinum sites and the N(Pt)/(N(Ru)+N(Pt)) at Ru sites are determined by the molar ratio of the Ru and Pt forming the alloy. For example, in an alloy with a molar ratio (Pt:Ru) of 2:3, the theoretical value of N(Ru)/(N(Pt)+N(Ru)) is 0.60 (3/(3+2)). The theoretical value of N(Pt)/(N(Ru)+N(Pt)) is 0.40 (2/(2+3)). A "platinum site" is a site of coordinated platinum within the alloy. A "Ru site" is a site of coordinated Ru within the alloy. If the Pt and Ru atoms are uniformly dispersed within the alloy particles, the N(Ru)/(N(Pt)+N(Ru)) and N(Pt)/(N(Ru)+N(Pt)) indicate values close to the theoretical values. The farther away from the theoretical values they become, the greater the amount of Pt present at Pt sites and the greater the amount of Ru present at Ru sites. As a result, this means that the alloy as a whole will have low uniformity of dispersion of Pt and Ru atoms. Accordingly, in a platinum and ruthenium alloy in which N(Ru)/(N(Pt)+N(Ru)) at platinum sites and N(Pt)/(N(Ru)+N(Pt)) at Ru sites are close to their respective theoretical values, the uniformity of dispersion of Pt and Ru atoms will be high throughout the alloy as a whole. As a result, a high CO tolerance will be present and it will be possible to achieve a catalytic effect based on Pt.

In the catalyst of the present invention, N(Ru)/(N(Pt)+N(Ru)) at platinum sites and N(Pt)/(N(Ru)+N(Pt)) at Ru sites are closer to their theoretical values and Pt and Ru atoms are more uniformly present in the alloy than in conventional carbon materials supporting PtRu alloys. This has been presumed to enhance CO tolerance. From such a perspective, N(Ru)/(N(Pt)+N(Ru)) at platinum sites desirably falls within a range of 0.9 to 1.1 times the theoretical value and N(Pt)/(N(Ru) + N(Pt)) at Ru sites desirable falls within a range of 0.9 to 1.1 times the theoretical value. It is theoretically impossible for N(Ru)/(N(Pt)+N(Ru)) at platinum sites and N(Pt)/(N(Ru)+N(Pt)) at Ru sites to exceed their theoretical values. Accordingly, the theoretical upper limit is 1.0 times the theoretical value, and 1.0 times the theoretical value is optimal. However, when EXAFS measurement precision is taken into account, a value of up to 1.1 times, which is in excess of the theoretical value, is sometimes exhibited. Taking such occurrences into account, an upper limit of the N(Ru)/(N(Pt)+N(Ru)) at platinum sites and N(Pt)/(N(Ru)+N(Pt)) at Ru sites of 1.1 times the theoretical value has been adopted in both cases. XAFS is divided into XANES and EXAFS (extended X-ray absorption fine structure) based on the energy region. In the present invention, XAFS denotes EXAFS.

In the catalyst of the present invention, the average particle diameter of the alloy falls within a range of 1 to 5 nm, and the standard deviation in the particle diameter falls within a range of 2 nm or less. When the average particle diameter of the alloy is less than 1 nm, the hydrogen oxidation reactivity per surface active site decreases. When 5 nm is exceeded, the surface active sites decrease. In both cases, catalytic activity decreases. From the perspective of exhibiting relatively high catalytic activity, the average particle diameter of the alloy desirably falls within a range of 2 to 5 nm. Further, the standard deviation in the particle diameter in the alloy falls within a range of 2 nm or less. When 2 nm is exceeded, there tends to be fluctuation in performance at active sites. The lower limit of the standard deviation in the particle diameter is suitably 0.5 nm from the perspective of achieving both manufacturing efficiency and uniform reactivity.

In the fuel cell anode catalyst of the present invention, from the perspective of achieving good performance when the catalyst of the present invention is employed as an anode catalyst, the quantity of platinum and ruthenium alloy that is supported can fall within a range of 10 to 120 mass parts per 100 mass parts of support, for example. Desirably, it falls within a range of 90 to 130 mass parts per 100 mass parts of support, for example.

The fuel cell anode catalyst of the present invention covers catalysts in which a metal oxide with an average particle diameter falling within a range of 1 to 5 nm is supported in addition to the above platinum and ruthenium alloy. Examples of this metal oxide are alumina (aluminum oxide), titanium oxide, tin oxide, zirconia (zirconium oxide), ceria (cerium oxide), and ceria-zirconia.

In the catalyst of the present invention, the average particle diameter of the above metal oxide falls within a range of 1 to 5 nm and the standard deviation in the particle diameter desirably falls within a range of 0.5 to 2 nm. When the average particle diameter of the metal oxide is less than 1 nm, reactivity with Pt and the like are high and alloying cannot be controlled. When 5 nm is exceeded, surface active sites decrease and the interaction with Pt weakens. The average particle diameter of the metal oxide desirably falls within a range of 2 to 5 nm. Further, the standard deviation in the particle diameter of the metal oxide falls within a range of 2 nm and below. When 2 nm is exceeded, reactivity with Pt and the like cannot be controlled. The lower limit of the standard deviation in the particle diameter of the metal oxide is suitably 0.5 nm from the perspective of achieving manufacturing efficiency and uniform reactivity.

From the perspective of achieving good performance when the catalyst of the present invention is employed as an anode catalyst, the quantity of metal oxide supported in the fuel cell anode catalyst of the present invention can fall within a range of 0.1 to 10 mass parts per 100 mass parts of support, for example. It desirably falls within a range of 0.1 to 5 mass parts per 100 mass parts of support, for example. From the perspective of imparting interactivity without covering active sites with alloy particles, the ratio of the mass of platinum and ruthenium alloy that is supported to the mass of metal oxide that is supported can fall within a range of 0.03 to 0.3 mass parts of metal oxide per mass part of platinum and ruthenium alloy, for example.

### [The manufacturing method]

The method for manufacturing the fuel cell anode catalyst of the present invention is defined in claim 10. The present invention also covers this manufacturing method. The method for manufacturing a fuel cell anode catalyst of the present invention comprises the following steps (1) to (4):
(1) causing a platinum compound and a ruthenium compound to be supported on a carbon material;
(2) placing the carbon material supporting a platinum compound and a ruthenium compound of step (1) in a hydrogen-containing atmosphere;
(3) heating the carbon material obtained in step (2) in a helium-containing atmosphere; and
(4) heating the carbon material obtained in step (3) in a hydrogen-containing atmosphere.

### Step (1)

In step (1), a platinum compound and a ruthenium compound are supported on a carbon material. In step (1), for example, a platinum compound is supported on a carbon material after which a ruthenium compound is supported. Conversely, a ruthenium compound can be first supported on a carbon material, followed by a platinum compound. The carbon material is as set forth above. Examples of the platinum compound include dinitrodiamine platinum nitrate. However, no limitation to this compound is intended. Those platinum compounds that are commonly employed in the preparation of platinum and platinum alloys can be suitably employed. An example of the ruthenium compound is RuCl₃n(H₂O). However, no limitation to this compound is intended. Those ruthenium compounds that are commonly employed in the preparation of ruthenium and ruthenium alloys can be suitably employed. The platinum compound and the ruthenium compound can be supported on the carbon material taking into account the desired molar ratio of platinum and ruthenium and the quantity of platinum and ruthenium supported. The method of support is not specifically limited. For example, support can be achieved by impregnating a carbon material with an aqueous solution containing a platinum compound and a ruthenium compound. Adjuvants that promote impregnation can be suitably added to the aqueous solution.

### Step (2)

Step (2) is a step in which the carbon material that has been caused to support a platinum compound and a ruthenium compound in step (1) is placed in a hydrogen-containing atmosphere. In this step, the platinum compound and the ruthenium compound that have been supported on the carbon material are reduced. The hydrogen-containing atmosphere can be a hydrogen atmosphere, that is, an atmosphere comprised only of hydrogen. However, it can also contain gases that do not react with hydrogen. An example of an inert gas is argon. When a mixed gas of hydrogen and an inert gas is employed, a hydrogen content falling within a range of 2 to 10%, for example, is suitable from the perspective of slow reduction. The hydrogen-containing atmosphere can be achieved in the form of a reaction vessel filled with hydrogen gas or a hydrogen-containing gas, or by causing these gases to flow through the reaction vessel.

The step of placement in a hydrogen-containing atmosphere of step (2) can be implemented, for example, at a temperature falling within a range of 0 to 50°C for 0.1 to 10 hours. When the temperature is less than 0°C and the implementation period is less than 0.1 hour, the desired reduction effect becomes difficult to achieve. Conversely, when the temperature exceeds 50°C and the implementation period exceeds 10 hours, it becomes difficult to achieve the desired effect of obtaining a highly dispersed PtRu catalyst.

### Step (3)

Step (3) is a step in which the carbon material obtained in step (2) is heated in a helium-containing atmosphere. This step produces a PtRu alloy, or alloy precursor, comprised of a platinum compound and a ruthenium compound (at least a portion of which is a metal that has been reduced in step (2)) supported on a carbon material. The helium-containing atmosphere can be a helium atmosphere, that is, an atmosphere of just helium. However, it can also contain other inert gases that do not react with helium. Examples of inert gases include argon and nitrogen. When employing a mixed gas of helium and an inert gas, a content of helium falling within a range of 20 to 100%, for example, is suitable from the perspective of permitting the rapid quenching that is set forth further below. The helium-containing atmosphere can be achieved in the form of a reaction vessel filled with helium gas or helium-containing gas, or a reaction vessel through which these gases are made to flow. From the perspective of enhancing heating efficiency, heating is conducted in a reaction vessel that has been filled with helium gas or a helium-containing gas (without a gas flow). Cooling can be conducted by means of a helium gas or helium-containing gas flow from the perspective of enhancing the cooling effect.

The step of heating in a helium-containing atmosphere of step (3) can be implemented at a temperature falling within a range of 700 to 1,000°C for from 0.05 hours to 5 hours. When the temperature is less than 700°C and the implementation period is less than 0.05 hours, it becomes difficult to achieve the desired effect, that is, the alloying effect (or alloy precursor-producing effect). Conversely, when the temperature exceeds 1,000°C or the implementation time exceeds 5 hours, it becomes difficult to achieve the desired effect, that is, the particles increase in size and it becomes difficult to achieve a large number of surface active sites.

In the step of heating in a helium-containing atmosphere of step (3), raising the temperature from the temperature at which step (2) ends (for example, room temperature (10 to 35°C)) to within the above temperature range of 700 to 1,000°C at a rapid rate of temperature rise of 50 to 100°C/minute, for example, is desirable from the perspective of achieving the desired reducing effect while inhibiting particle growth.

Once heating has ended, cooling is conducted at a cooling rate of 10 to 200°C/minute to at least a temperature of 500°C or lower. More specifically, for example, rapid quenching to at least 750°C at a cooling rate of 100 to 200°C/minute followed by cooling to at least 500°C at a cooling rate of 10 to 20°C/minute is desirable. After cooling to 500°C, the product can be allowed to cool to room temperature (to within a range of 10 to 35°C) (cooling can take place at any rate). When the heating temperature is 700 to 750°C, cooling to at least 500°C at a cooling rate of 10 to 20°C/minute is desirable. After cooling to 500°C, the product can be allowed to cool to room temperature (to within a range of 10 to 35°C) in the same manner as above (cooling can take place at any rate).

In step (3), the growth of metal particles is accelerated at a temperature of 500°C or greater. Thus, once the heating has ended, making the period at 500°C or higher as short as possible is important from the perspective of maintaining the alloy particles in a fine state. As set forth above, quenching to 500°C is important from the perspective of obtaining alloy particles in a state as close as possible to the state of dispersed Pt and Ru produced by heating to a range of from 700 to 1,000°C. When cooling to 500°C is conducted slowly after heating, even when the Pt and Ru have been temporarily dispersed by the above heating, Pt and Ru phase separation occurs during cooling, the dispersion state is not maintained, and it becomes difficult to achieve the catalyst supporting alloy particles that are the object of the present invention.

### Step (4)

Step (4) is a step in which the carbon material obtained in step (3) is heated in a hydrogen-containing atmosphere.

In this step, the platinum compound and the ruthenium compound, or precursors of an alloy derived therefrom, that have not been fully reduced are reduced and alloyed while maintaining the alloy comprising Pt and Ru in the dispersed state that has been produced in step (3). The hydrogen-containing atmosphere can be a hydrogen atmosphere, that is, an atmosphere of just hydrogen, but can also contain gases that do not react with hydrogen. Examples of an inert gas include argon. When employing a mixed gas of hydrogen and an inert gas, a hydrogen content falling within a range of 5 to 20%, for example, is suitable from the perspective of slow reduction.

The step of placement in a hydrogen-containing atmosphere of step (4) can be implemented at a temperature falling within a range of 70 to 200°C for a period of 0.2 to 20 hours, for example. When the temperature is less than 70°C and the implementation period is less than 0.2 hours, it becomes difficult to achieve the desired effect, that is, a surface reducing effect. Conversely, when the temperature exceeds 200°C and the implementation period exceeds 20 hours, it becomes difficult to achieve the desired effect, that is, the effect of stable atom dispersion.

In the method for manufacturing a fuel cell anode catalyst of the present invention, a step of causing a metal oxide to be supported on a carbon material can be further incorporated before step (1). In step (1), after impregnating the carbon material with a metal compound constituting a metal oxide, for example, the metal compound can be oxidized or particles of metal oxide can be supported. When particles of metal oxide are supported, fine particles of prescribed average particle diameter, such as colloidal particles, can be employed. Examples of metal oxides are the above-mentioned tin oxide, ceria (cerium oxide), zirconia (zirconium oxide), ceria-zirconia, and alumina (aluminum oxide). The metal oxide or metal compound can be supported by the carbon material by taking into account the desired quantity to be supported. The support method is not specifically limited. For example, support can be achieved by impregnating the carbon material with an aqueous solution containing the metal oxide or metal compound. Adjuvants that promote impregnation or support can also be suitably added to the aqueous solution.

The material of the present invention can be manufactured by the above manufacturing method.

The fuel cell employing the fuel cell anode catalyst of the present invention can be a fuel cell employing hydrogen obtained by modifying natural gas, for example. The fuel cell anode catalyst of the present invention can also be employed in other fuel cells, such as methanol fuel cells, particularly direct methanol fuel cells, as an anode catalyst. The fuel cell anode catalyst of the present invention is advantageously utilized as a direct methanol fuel cell anode catalyst due to its good CO tolerance.

### [The fuel cell anode]

The present invention includes a fuel cell anode having a layer comprised of an anode composition containing the above catalyst of the present invention and a proton-conducting polymer on a substrate surface.

The proton-conducting polymer employed in the anode composition has both the function of a proton-conducting medium that conducts the protons generated by the electrochemical reaction to a solid polymer electrolyte and the function of a binder binding the catalyst particles of the present invention to a conductive porous substrate as an electrode catalyst layer. Binders of the same material as the solid polymer electrolyte membrane can be employed as the proton-conducting polymer. For example, a perfluorosulfonic acid polymer known as Nafion (registered trademark of DuPont) can be suitably employed. This polymer is soluble in organic solvents such as alcohols. It can thus be advantageously employed as a solution to cause catalyst particles to bind to an electrically conductive porous substrate. Not only does it have excellent binding properties to catalyst particles, but it also has good proton conductivity. However, the proton-conducting polymers that can be employed in the present invention are not limited to perfluorosulfonic acid polymers.

According to the present invention, in the electrode catalyst layer, the ratio of the mass of the catalyst particles to the mass of the proton-conducting polymer (sometimes referred to hereinafter as the "catalyst particle/polymer mass ratio") falls for example within a range of from 3/1 to 20/1, desirably within a range of from 4/1 to 18/1. When the catalyst particle/polymer mass ratio is less than 3/1, the catalyst obtained tends to undergo carbon monoxide poisoning. Conversely, at greater than 20/1, catalyst particles tend to drop out of the electrode catalyst layer and the transport properties of protons generated in the electrode catalyst layer tend to deteriorate. As a result, the output density of the fuel cell obtained tends to drop.

In the present invention, the electrode catalyst layer can also contain, as a catalyst particle binder, a small quantity of resin in addition to the proton-conducting polymer. An example of an additional resin is a fluororesin that does not possess proton conductivity. More specific examples include polyvinylidene fluoride, ethyl tetrafluoride - propylene hexafluoride copolymer, and polyethylene tetrafluoride. The proportion of the resin in the binder is desirably 30 weight% or less, preferably 10 weight% or less, of the binder.

Examples of electrically conductive porous substrates are knit fabrics, woven cloth, nonwoven cloth, and papers made of fibers such as carbon and electrically conductive polymers, and electrically conductive porous membranes. Normally, carbon paper is desirably employed.

### [The fuel cell membrane electrode assembly]

The present invention further includes a fuel cell membrane electrode assembly in which the above anode of the present invention and a cathode are laminated with a polymer electrolyte membrane between them.

The fabrication of the cathode and anode will be described. In the present invention, the cathode is obtained by binding the electrode catalyst and a binder to and supporting them on an electrically-conductive porous substrate as an electrode catalyst layer. The structure thereof is not specifically limited. However, the electrode catalyst layer suitably comprises, in addition to carbon black powder supporting platinum microparticles, a conductivity adjuvant in the form of carbon black powder, a binder to hold them together, a proton-conducting polymer serving as a conductor for the protons generated by the electrochemical reaction, and the like.

As an example, the cathode can be obtained by forming a paste of carbon black powder supporting platinum microparticles and a conductivity adjuvant in the form of carbon black as needed using a suitable binder. The paste is then coated on an electrically conductive porous substrate such as that set forth above, heated, and dried. As needed, a proton-conducting polymer solution is coated thereover, heated and dried. Examples of binders that can be employed are N-methyl-2-pyrrolidone which is the polyvinylidene fluoride resin, and perfluorosulfonic acid polymer solutions such as Nafion (registered trademark of DuPont).

As an example, the anode can be obtained by preparing a paste of microparticles of platinum or a platinum alloy and a proton-conducting polymer, coating this paste on the above-described electrically conductive porous substrate, and then heating and drying it. However, the method of manufacturing the anode is not limited to this example.

Each of the electrically conductive porous substrates constituting the cathode and anode desirably comprise an electrically conductive water-repellent layer on the side supporting the electrode catalyst to prevent so-called flooding.

In the fuel cell of the present invention, a cation exchange membrane comprised of a perfluorosulfonic acid polymer such as those conventionally employed in solid polymer membrane cells, an example being Nafion (registered trademark), is suitably employed as a solid polymer electrolyte membrane. However, there is no limitation thereto. Accordingly, by way of example, a porous membrane comprised of a fluororesin such as polytetrafluoroethylene that has been impregnated with Nafion or some other ion-conducting substance, or a porous membrane or a nonwoven cloth comprised of a polyolefin resin such as polypropylene or polyethylene, supporting the above Nafion or some other ion-conducting substance, will do.

The present invention yields a fuel cell membrane electrode assembly by sandwiching such a solid polymer electrolyte membrane and laminating the above-described anode and cathode into a single body. A structure in which an electrically conductive separator in the form of a structural member for supplying and contacting oxidizing agents and reducing agents with the respective electrodes is disposed on either side of the membrane electrode assembly is called a cell. A structure in which multiple membrane electrode assemblies and electrically conductive separators are electrically and serially stacked in alternating fashion is called a stack.

### [Fuel cell]

The present invention further covers a fuel cell comprising the fuel cell membrane electrode assembly of the present invention set forth above.

In the present invention, the separator material and the structure of the passage for the reducing agent or oxidizing agent present in the separator are not specifically limited. For example, as is already known, it suffices to form flow passages for the oxidizing agent or reducing agent on both sides of the separator, and stack the separator on the above electrode. For example, the separator is formed of graphite, a molded resin article dispersed with carbon, a metal material, or the like.

For example, the fuel cell according to the present invention can be comprised of a membrane electrode assembly anode in which the above anode and cathode are laminated with the above solid polymer electrolyte membrane between them to form a single body; an electrically conductive separator stacked on the above anode and in which passages for hydrogen, methanol, or the like are formed on the anode side; and an electrically conductive separator that is stacked on the above cathode and in which passages for air or oxygen are formed on the cathode side. Using the passages in the above separator, a reducing agent (fuel) in the form of hydrogen or methanol can be supplied to the anode; using the passages in the above separator, an oxidizing agent (oxygen or air) can be supplied to the cathode; and the two can be brought into contact to achieve an electric current. According to the fuel cell of the present invention as set forth above, stable operation can be achieved because the anode catalyst tends not to be subjected to carbon monoxide poisoning.

The operating temperature of the fuel cell of the present invention is normally 0°C or higher, desirably falling within a range of 15 to 90°C, and optimally failing within a range of 30 to 80°C. When the operating temperature is excessively high, there is a risk that the materials employed will deteriorate, peel away, or the like.

### [Examples]

The present invention will be described in greater detail through Examples. However, the Examples are given by way of example, and are not intended as limitations. None of the examples is representing the invention as defined in any of claims 1-9.

### Example 1

### (1)-1 Method of supporting Pt

1. A 0.56506 g quantity of TKK carbon E support (specific surface area 900 m²/g), 8.2675 g of dinitrodiamine platinum nitrate solution, and a small quantity of distilled water were mixed ultrasonically. Distilled water was added to make a total of 200 mL of distilled water, and 25 mL of ethanol was added.
2. A reflux tube was attached and stirring was conducted at 92°C or higher for 8 hours.
3. Washing and filtering were conducted with about 1 L of distilled water.

### (1)-2 Method of supporting Ru

1. A 0.75745 g quantity (ratio (molar ratio) of Pt and Ru: 1:3) of RuCl₃n(H₂O) and a small quantity of distilled water were mixed ultrasonically. The mixture was charged to a three-necked flask, distilled water was added to make a total quantity of 85 mL of water, and 9 mL of methanol was added.
2. Reflux reduction was conducted while stirring at 65°C for 6 to 8 hours. Although the color dissipated considerably, it did not disappear entirely. The temperature was thus raised to 70°C and the mixture was left standing for 6 to 8 hours. The color still did not disappear so 10 mL of methanol was added and the mixture was left standing overnight. The color still did not disappear, so the temperature was raised to 85°C and the mixture was left standing for 6 to 8 hours.
3. Two liters of distilled water were heated to a suitable temperature and used to filter and wash the catalyst.
4. Drying was conducted overnight at 80°C.
5. The catalyst was finely crushed to obtain a powder.
6. A 0.1 g quantity of catalyst was placed in a quartz boat.

### (2) The reducing step

1. The boat was placed in a 100 V pipe oven.
2. A 60 mL/minute He flow was established and the boat was left for 30 minutes.
3. A 60 mL/minute H₂ (5%) + Ar flow was established. The temperature rose for the first 10 minutes and subsequently dropped. The boat was then left for 1 hour.
4. A 60 mL/minute He flow was established and the boat was left standing for 60 minutes.

### (3) The heat treatment step

1. A 60 mL/minute He flow was established and the AC 100 V was increased to 115 V with a Slidax.
2. A voltage of 115 V was passed through the pipe oven. At about 11 minutes, about 890°C was reached (heating rate about 80°C/minute).
3. The power was cut off immediately upon reaching 890°C. The residual heat carried the temperature to about 900°C, at which point the temperature began to drop rapidly, reaching about 750°C in about 1 minute (cooling rate 150°C/minute).
4. When the temperature reached about 600°C, the cover of the pipe oven was opened, and the temperature went from 750°C to 500°C in about 17 minutes (cooling rate about 15°C/minute).

### (4) The hydrogen treatment step

1. At room temperature, a 60 mL/minute H₂ (5%) + Ar flow was established and the temperature was raised by 4°C/minute to 150°C.
2. The boat was kept at 150°C for 2 hours.
3. Cooling was conducted to room temperature.
4. The gas was changed to N₂ and a 60 mL/minute flow was established.

STEM measurement of the PtRu/C catalyst particles obtained revealed the average particle diameter of the PtRu particles to be 3.42 nm and the standard deviation in the particle diameter to be 1.38 nm. XAFS measurement revealed the N(Ru)/(N(Pt) + N(Ru)) ratio to be 0.63 and the N(Pt)/(N(Ru)+N(Pt)) ratio to be 0.37. The theoretical values thereof were 0.60 and 0.40 respectively. Thus, the PtRu particle N(Ru)/(N(Pt)+N(Ru)) and N(Pt)/(N(Ru)+N(Pt)) ratio fell within a range of 0.9 to 1.1 times the theoretical value. As a result, it was understood that PtRu particles alloyed to an extremely high degree had been manufactured.

The apparatus employed in EXAFS (extended X-ray absorption fine structure) measurement were as follows. The X-ray absorption spectra of the Pt LIII absorption edge and the RuK absorption edge were analyzed at beamlines BL-7C and NW/10A at the Photon Factory of the Institute of Materials Structure Science, High-Energy Accelerator Research Organization.

### Example 2

With the exceptions that the quantity of RuCl₃·nH₂O employed was changed from 0.75745 g to 0.378 g and the ratio (molar ratio) of Pt and Ru was adjusted to 2:3, a PtRu/C catalyst was obtained in the same manner as in Example 1.

STEM measurement of the PtRu/C catalyst particles obtained revealed the average particle diameter of the PtRu particles to be 2.35 nm and the standard deviation in the particle diameter to be 1.16 nm.

### Example 3

With the exception that TKK carbon E support was replaced with porous carbon (specific surface area 1,800 m²/g), a PtRu/C catalyst was obtained in the same manner as in Example 1. STEM measurement of the PtRu/C catalyst obtained revealed the average particle diameter of the PtRu particles to be 2.35 nm and the standard deviation in the particle diameter to be 1.16 nm.

### Comparative Example 1

Commercial Pt₂Ru₃/C catalyst was employed in Comparative Example 1. XAFS revealed the degree of alloying to be such that the N(Ru)/(N(Pt)+N(Ru)) ratio was 0.54 and the N(Pt)/(N(Ru)+N(Pt)) ratio was 0.31.

### Example 4

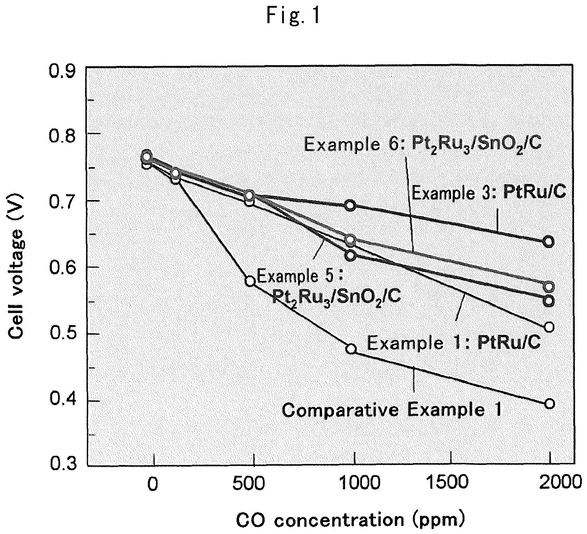

The degree of the drop in voltage caused by the carbon monoxide contained in the hydrogen fuel was evaluated based on when pure hydrogen was used as fuel. Table 1 and Figure 1 give the results of measurement of the voltage at a current density of 0.2 A/cm² in fuel cells employing anode catalysts in the form of the catalysts of Examples 1 and 3 and Comparative Example 1, respectively.

The conditions were as follows.
Electrolyte: Nafion (registered trademark) NRE 212
Cathode: Pt/C (0.5 mg/cm²);
Gas: O₂;
Flow rate: 80 mL/minute;
70°C humidification.
Anode: Various PtRu/C (0.5 mg-PtRu/cm²);
Gas: hydrogen containing 0 to 2,000 ppm CO;
Flow rate: 80 mL/minute;
70°C humidification.

**[Table 1]**

| Cell voltage at various CO concentrations | | | | | |
|---|---|---|---|---|---|
| CO concentration (ppm) | 0 | 100 | 500 | 1000 | 2000 |
| Example 3 | 0.737 | 0.727 | 0.71 | 0.685 | 0.635 |
| Example 1 | 0.74 | 0.728 | 0.701 | 0.635 | 0.503 |
| Comp. Example | 0.761 | 0.734 | 0.677 | 0.579 | 0.417 |

### Example 5

### (SnO₂/C support)

1. An 89.4 mg quantity of SnCl₂·2H₂O was weighed out on weighing paper and the compound was charged to a three-necked flask.
2. A suitable quantity of ethylene glycol was added.
3. Heating was conducted to 190°C in an oil bath (silicon oil). After 30 minutes, the mixture was left standing until it returned to room temperature.
4. A 1.866 g quantity of carbon powder (E support) (specific surface area 900 m²/g) was weighed out and charged to a 50 mL beaker.
5. EG was added to make about 40 mL and ultrasonic shaking was conducted for several minutes.
6. The mixture was charged to a flask, water was added, the mixture was heated to 90°C in an oil bath, and stirring was conducted overnight.
7. To remove the ethylene glycol, suction filtration and washing were conducted in a suction bottle with a 3 times quantity of hot water.
8. Drying was conducted for several hours.
9. A heat treatment was conducted. The temperature was raised for 30 minutes under a 60 mL/minute flow of N₂, and drying was conducted at 80°C for 10 hours.

### (The Pt support step)

1. A 0.5651 g quantity of the SnO₂/C (80°C N₂ Dry) obtained above was weighed out.
2. Stirring was conducted with 100 mL of pure water. Ultrasonic dispersion was conducted for 2 minutes, after which the mixture was charged to a flask.
3. An 8.31 g quantity of Pt(NO₂)(NH₂) (0.4579 wt%) was weighed out.
4. Stirring was conducted with 100 mL of pure water. Ultrasonic dispersion was conducted for 2 minutes, after which the mixture was charged to a flask.
5. Stirring was conducted at ordinary temperature for 1 to 2 hours.
6. A 30 mL quantity of ethanol was added to the flask.
7. Heating was conducted overnight at 95°C in an oil bath. Subsequently, the mixture was subjected to a reduced pressure filtration step.
8. After reduced pressure filtration, drying was conducted at ordinary temperature (5 hours to overnight).
9. A 60 mL/minute flow of N₂ was established at room temperature (25°C) for from 30 minutes to 1 hour. (This was done to remove the air.)
10. The temperature was raised to 80°C over 30 minutes. After maintaining the temperature for 10 hours, the mixture was allowed to cool naturally.
11. After baking, the stopper was removed from the glass tube and the mixture was left standing for 30 minutes. (The N₂ flow was not stopped. Sudden contact with air would have presented the risk of ignition.)
12. The N₂ was stopped and the mixture was left standing for another 30 minutes.
13. A 1.27 g quantity of the sample obtained in the previous step was weighed out.
14. A 0.926 g quantity of RuCl₃ (99.9%) was weighed out.
15. After conducting ultrasonic dispersion for 2 minutes in 100 mL of pure water, the mixture was charged to a flask.
16. Stirring was conducted at 100 rpm at ordinary temperature for 1 to 2 hours.
17. A 10 mL quantity of Me-OH was added and the mixture was heated overnight in an oil bath (70°C).

Subsequently, reduction step (2) and heat treatment step (3) were conducted in the same manner as in Example 1 to obtain a PtRu/SnO₂/C catalyst. The ratio (molar ratio) of Pt and Ru was 2:3. The ratio of SnO₂ to Pt and Ru (SnO₂/(Pt+Ru)) was 1/50 (mass ratio). STEM measurement of the PtRu/SnO₂/C catalyst particles obtained revealed the average particle diameter of the PtRu particles and the standard deviation in particle diameter to be equivalent to those in Example 1.

### Example 6

With the exception that the 1.866 g of carbon black (E support) that was weighed out (in the case of SnO₂ 1 wt%) was changed to 1.134 g (in the case of SnO₂ 2.5 wt%), a PtRu/SnO₂/C catalyst was obtained in the same manner as in Example 5. The Pt and Ru ratio (molar ratio) was 2:3. The ratio of SnO₂ to Pt Ru (SnO₂(Pt+Ru)) was 1/20 (weight ratio). STEM measurement of the PtRu/SnO₂/C catalyst particles obtained revealed the average particle diameter of the PtRu particles obtained and the standard deviation in particle diameter to be equivalent to those in Example 1.

### Example 7

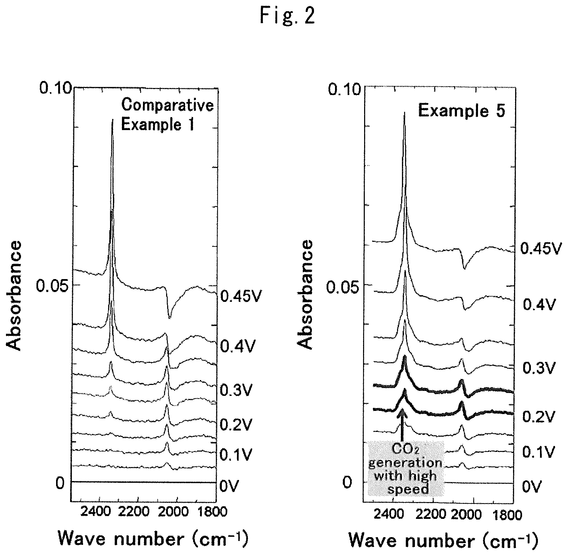

The electrochemical CO oxidation performance of the PtRu/SnO₂/C catalyst prepared in Example 5 and the Pt₂Ru₃/C catalyst indicated in Comparative Example 1 were obtained by "In-situ FTIR analysis". The conditions were as follows. The results are given in Figure 2.
Cell temperature: 25°C; 0.1 M HClO₄
1) Pure CO was passed through 0.1 M HClO₄ electrolyte solution at 0.05 V for 20 minutes.
2) Ar was passed through for 35 minutes to remove the CO that had dissolved in the solution.
3) Sweeping was conducted at 0.25 mV/s over a range of 0.00 to 0.5 V at 25°C. The resolution was 8 cm⁻¹, with 25 scans.

### Example 8

The drop in voltage caused by carbon monoxide contained in the hydrogen fuel was analyzed based on when pure hydrogen was employed as fuel. Figure 1 gives the voltage measurement results at a current density of 0.2 A/cm² for the fuel cells employing the catalysts of Examples 5 and 6 and Comparative Example 1 as anode catalysts.

The conditions were as follows.
Electrolyte: Nafion (registered trademark) NRE 212
Cathode: Pt/C (0.5 mg/cm²);
Gas: O₂;
Flow rate: 80 mL/minute;
70°C humidification
Anode: Various Pt₂Ru₃/C (0.5 mg-PtRu/cm²)
Gas: Hydrogen containing 0 to 2,000 ppm CO;
Flow rate 80 mL/minute;
70°C humidification

### Example 9

With the exception that the SnO₂/C (80°C N₂ Dry) was replaced with TiO₂/C (TiO₂ 2.5 wt%), the platinum support step was conducted and a PtRu/TiO₂/C catalyst was obtained in the same manner as in Example 5. The Pt and Ru ratio (molar ratio) was 2:3. The ratio of TiO₂ to Pt Ru (TiO₂/ (Pt+Ru)) was 1/20. STEM measurement of the PtRu/TiO₂/C catalyst particles obtained revealed the average particle diameter of the PtRu particles obtained and the standard deviation in particle diameter to be equivalent to those in Example 1.

### Example 10

With the exception that after the heat treatment (9) of the SnO₂/C support, an additional 30 minutes of baking in air was conducted at 300°C, a PtRu/SnO₂/C catalyst was obtained in the same manner as in Example 5. The Pt and Ru ratio (molar ratio) was 2:3. The ratio of SnO₂ to Pt Ru (SnO₂/(Pt+Ru)) was 1/50. STEM measurement of the PtRu/SnO₂/C catalyst particles obtained revealed the average particle diameter of the PtRu particles obtained and the standard deviation in particle diameter to be equivalent to those in Example 1.

### Example 11

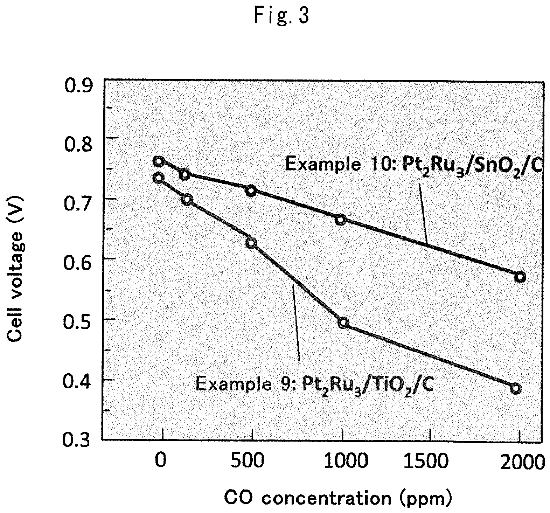

With the exception that Examples 9 and 10 were employed as anode catalysts, measurement was conducted in the same manner as in Example 8. The results are given in Figure 3.

### [Industrial Applicability]

The present invention is useful in the field of fuel cells.

## Claims

1. A fuel cell anode catalyst in which a platinum and ruthenium alloy is supported on a carbon material, such that the molar ratio of platinum to ruthenium (Pt:Ru) in the alloy falls within a range of from 1:1 to 1:5; when the numbers of Pt atom coordination sites and the number of Ru atom coordination sites of the atom sites in the alloy, as measured by means of the X-ray absorption fine structure, are denoted as N(Pt) and N(Ru), respectively, N(Ru)/(N(Pt)+N(Ru)) at platinum sites falls within a range of 0.8 to 1.1 times the theoretical value, and N(Pt)/(N(Ru)+N(Pt)) at Ru sites falls within a range of 0.8 to 1.1 times the theoretical value; the average particle diameter of the alloy falls within a range of 1 to 5 nm; and the standard deviation in the particle diameter falls within a range of 2 nm and below.

2. The catalyst according to claim 1, wherein a metal oxide with an average particle diameter falling within a range of 1 to 5 nm is further supported.

3. The catalyst according to claim 2, wherein the metal oxide is tin oxide.

4. The catalyst according to any one of claims 1 to 3, wherein the carbon material is comprised of particles having an average particle diameter falling within a range of 10 nm to 10 mm.

5. The catalyst according to any one of claims 1 to 4, wherein N(Ru)/(N(Pt)+N(Ru)) at platinum sites falls within a range of 0.9 to 1.1 times the theoretical value and N(Pt)/(N(Ru)+N(Pt)) at Ru sites falls within a range of 0.9 to 1.1 times the theoretical value.

6. The catalyst according to any one of claim1 to 5, wherein the catalyst is a methanol fuel cell anode catalyst.

7. A fuel cell anode having a substrate surface comprised of an anode composition containing the catalyst according to any one of claims 1 to 5 and a proton-conducting polymer.

8. A fuel cell membrane electrode assembly in which the anode according to claim 7 and a cathode are laminated with a polymer electrolyte membrane therebetween.

9. A fuel cell comprising the fuel cell membrane electrode assembly according to claim 8.

10. A method for manufacturing the fuel cell anode catalyst according to claim 1, comprising the steps of:
(1) causing a platinum compound and a ruthenium compound to be supported on a carbon material;
(2) placing the carbon material supporting a platinum compound and a ruthenium compound of step (1) in a hydrogen-containing atmosphere;
(3) heating the carbon material obtained in step (2) in a helium-containing atmosphere, wherein the step of heating in a helium-containing atmosphere of step (3) is implemented at a temperature falling within a range of 700 to 1,000°C for from 0.05 to 5 hours and wherein after heating at a temperature falling within a range of 700 to 1,000°C, cooling is conducted at a cooling rate of from 10 to 200°C/minute until 500°C or lower is reached.; and
(4) heating the carbon material obtained in step (3) in a hydrogen-containing atmosphere and wherein the step of heating under a hydrogen-containing atmosphere of step (4) is implemented at a temperature falling within a range of 70 to 200°C for from 0.2 to 20 hours.

11. The manufacturing method according to 10, further comprising the step of causing the carbon material to support a metal oxide prior to step (1).

12. The manufacturing method according to claim 10 or 11, wherein in step (1), the carbon material is caused to support a platinum compound and then caused to support a ruthenium compound.

13. The manufacturing method according to any one of claims 10 to 12, wherein the step of placement in a hydrogen-containing atmosphere of step (2) is implemented at a temperature falling within a range of 0 to 50°C for from 0.1 hour to 10 hours.

14. The manufacturing method according to claim 10, wherein cooling is conducted from 750°C to 500°C at a cooling rate of 10 to 20°C/minute.

## Patentansprüche

1. Brennstoffzellen-Anodenkatalysator, wobei eine Platin- und Ruthenium-Legierung getragen wird von einem Kohlenstoff-Material, sodass das Stoffmengenverhältnis von Platin zu Ruthenium (Pt:Ru) in der Legierung in einen Bereich fällt von 1:1 bis 1:5 wenn die Anzahl der Pt-Atom-Koordinationsstellen und die Anzahl der Ru-Atom-Koordinationsstellen der Atom-Plätze in der Legierung, wie gemessen mittels Röntgenabsorptions-Feinstruktur, bezeichnet werden als N(Pt) beziehungsweise N(Ru), dann fällt N(Ru) / (N(Pt) + N(Ru)) an den Platin-Stellen in einen Bereich von 0,8 bis 1,1, multipliziert mit dem theoretischen Wert, und N(Pt) / (N(Ru) + N(Pt)) an den Ru-Stellen fällt in einen Bereich von 0,8 bis 1,1, multipliziert mit dem theoretischen Wert; der mittlere Partikeldurchmesser der Legierung fällt in einen Bereich von 1 bis 5 nm; und die Standardabweichung des Partikeldurchmessers fällt in einen Bereich von 2 nm und darunter.

2. Katalysator nach Anspruch 1, wobei ferner ein Metalloxid mit einem mittleren Partikeldurchmesser, der in einen Bereich von 1 bis 5 nm fällt, getragen wird.

3. Katalysator nach Anspruch 2, wobei das Metalloxid Zinnoxid ist.

4. Katalysator nach einem der Ansprüche 1 bis 3, wobei das Kohlenstoff-Material Partikel umfasst, aufweisend einen mittleren Partikeldurchmesser, der in einen Bereich fällt von 10 nm bis 10 mm

5. Katalysator nach einem der Ansprüche 1 bis 4, wobei N(Ru) / (N(Pt) + N(Ru)) an den Platin-Stellen in einen Bereich fällt von 0,9 bis 1,1, multipliziert mit dem theoretischen Wert, und N(Pt) / (N(Ru) + N(Pt)) an den Ru-Stellen in einen Bereich fällt von 0,9 bis 1,1, multipliziert mit dem theoretischen Wert.

6. Katalysator nach einem der Ansprüche 1 bis 5, wobei der Katalysator ein Methanol-Brennstoffzellen-Anodenkatalysator ist.

7. Brennstoffzellen-Anode, aufweisend eine Substrat-Oberfläche umfassend eine Anoden-Zusammensetzung, die den Katalysator nach einem der Ansprüche 1 bis 5 und ein protonenleitendes Polymer enthält.

8. Zusammenbau einer Brennstoffzellen-Membranelektrode, wobei die Anode nach Anspruch 7 und eine Kathode geschichtet sind mit einer Polymer-Elektrolyt-Membran dazwischen,

9. Brennstoffzelle, umfassend den Zusammenbau der Brennstoffzellen-Membran-Elektrode nach Anspruch 8,

10. Verfahren zur Herstellung des Brennstoffzellen-Anodenkatalysators nach Anspruch 1, umfassend die Schritte:
(1) Bewirken, dass eine Platinverbindung und eine Rutheniumverbindung auf einem Kohlenstoff-Material getragen werden;
(2) Platzieren des Kohlenstoff-Materials, welches eine Platinverbindung und eine Rutheniumverbindung aus Schritt (1) trägt, in einer wasserstoffhaltigen Atmosphäre;
(3) Erwärmen des in Schritt (2) erhaltenen Kohlenstoff-Materials in einer heliumhaltigen Atmosphäre, wobei der Schritt des Erwärmens in einer heliumhaltigen Atmosphäre von Schritt (3) bei einer Temperatur erfolgt, welche in einen Bereich von 700 bis 1000 °C fällt, für 0,05 bis 5 Stunden, und wobei nach dem Erwärmen bei einer Temperatur, welche in einen Bereich von 700 bis 1000 °C fällt, ein Abkühlen durchgeführt wird bei einer Abkühlgeschwindigkeit von 10 bis 200 °C/min, bis 500 °C oder weniger erreicht worden sind; und
(4) Erwärmen des in Schritt (3) erhaltenen Kohlenstoff-Materials in einer wasserstoffhaltigen Atmosphäre, und wobei der Schritt des Erwärmens in einer wasserstoffhaltigen Atmosphäre in Schritt (4) bei einer Temperatur erfolgt, welche in einen Bereich von 70 bis 200 °C fällt, für 0,2 bis 20 Stunden.

11. Herstellungsverfahren nach 10, ferner umfassend den Schritt des Bewirkens, dass das Kohlenstoff-Material ein Metalloxid trägt, bevor Schritt (1) stattfindet.

12. Herstellungsverfahren nach Anspruch 10 oder 11, wobei in Schritt (1) bewirkt wird, dass das Kohlenstoff-Material eine Platinverbindung trägt, und anschließend bewirkt wird, dass es eine Rutheniumverbindung trägt.

13. Herstellungsverfahren nach einem der Ansprüche 10 bis 12, wobei der Schritt des Platzierens in einer wasserstoffhaltigen Atmosphäre in Schritt (2) bei einer Temperatur erfolgt, die in einen Bereich von 0 bis 50 °C fällt, für 0,1 Stunden bis 10 Stunden.

14. Herstellungsverfahren nach Anspruch 10, wobei das Abkühlen durchgeführt wird von 750 °C bis 500 °C, bei einer Abkühlgeschwindigkeit von 10 bis 20 °C pro Minute.

## Revendications

1. Catalyseur pour anode de cellule à combustible dans lequel un alliage de platine et ruthénium est supporté sur un matériau de carbone, de sorte que le rapport molaire entre platine et ruthénium (Pt:Ru) dans l'alliage se situe dans une plage de 1:1 à 1:5 ; lorsque les nombres de sites de coordination d'atomes Pt et le nombre de sites de coordination d'atomes Ru des sites d'atomes dans l'alliage, tels que mesurés au moyen de la structure fine d'absorption de rayons X, sont notés N(Pt) et N(Ru), respectivement, N(Ru)/(N(Pt)+N(Ru)) aux sites de platine se situe dans une plage de 0,8 à 1,1 fois la valeur théorique, et N(Pt)/(N(Ru)+N(Pt)) aux sites de Ru se situe dans une plage de 0,8 à 1,1 fois la valeur théorique ; le diamètre de particule moyen de l'alliage se situe dans une plage de 1 à 5 nm ; et l'écart type du diamètre de particule se situe dans une plage de 2 nm et moins.

2. Catalyseur selon la revendication 1, dans lequel un oxyde métallique avec un diamètre de particule moyen se situant dans une plage de 1 à 5 nm est supporté en plus.

3. Catalyseur selon la revendication 2, dans lequel l'oxyde métallique est de l'oxyde d'étain.

4. Catalyseur selon l'une quelconque des revendications 1 à 3, dans lequel le matériau de carbone se compose de particules ayant un diamètre de particule moyen se situant dans une plage de 10 nm à 10 mm.

5. Catalyseur selon l'une quelconque des revendications 1 à 4, dans lequel N(Ru)/(N(Pt)+N(Ru)) aux sites de platine se situe dans une plage de 0,9 à 1,1 fois la valeur théorique et N(Pt)/(N(Ru)+N(Pt)) aux sites de Ru se situe dans une plage de 0,9 à 1,1 fois la valeur théorique.

6. Catalyseur selon l'une quelconque des revendications 1 à 5, dans lequel le catalyseur est un catalyseur pour anode de cellule à combustible au méthanol.

7. Anode de cellule à combustible ayant une surface de substrat composée d'une composition d'anode contenant le catalyseur selon l'une quelconque des revendications 1 à 5 et un polymère conducteur de protons.

8. Ensemble électrode à membrane de cellule à combustible dans lequel l'anode selon la revendication 7 et une cathode sont stratifiées avec une membrane électrolytique polymère entre elles.

9. Cellule à combustible comprenant l'ensemble électrode à membrane de cellule à combustible selon la revendication 8.

10. Procédé de fabrication du catalyseur pour anode de cellule à combustible selon la revendication 1, comprenant les étapes de :
(1) amenée d'un composé de platine et d'un composé de ruthénium à être supportés sur un matériau de carbone ;
(2) placement du matériau de carbone supportant un composé de platine et un composé de ruthénium de l'étape (1) dans une atmosphère contenant de l'hydrogène ;
(3) chauffage du matériau de carbone obtenu dans l'étape (2) dans une atmosphère contenant de l'hélium, dans lequel l'étape de chauffage dans une atmosphère contenant de l'hélium de l'étape (3) est mise en oeuvre à une température se situant dans une plage de 700 à 1000 °C pendant 0,05 à 5 heures et dans lequel après chauffage à une température se situant dans une plage de 700 à 1000 °C, le refroidissement est réalisé à une vitesse de refroidissement de 10 à 200 °C/minute jusqu'à ce que 500 °C ou moins soient atteints ; et
(4) chauffage du matériau de carbone obtenu dans l'étape (3) dans une atmosphère contenant de l'hydrogène et dans lequel l'étape de chauffage sous une atmosphère contenant de l'hydrogène de l'étape (4) est mise en oeuvre à une température se situant dans une plage de 70 à 200 °C pendant 0,2 à 20 heures.

11. Procédé de fabrication selon la revendication 10, comprenant en outre l'étape d'amenée du matériau de carbone à supporter un oxyde métallique avant l'étape (1).

12. Procédé de fabrication selon la revendication 10 ou 11, dans lequel dans l'étape (1), le matériau de carbone est amené à supporter un composé de platine et ensuite amené à supporter un composé de ruthénium.

13. Procédé de fabrication selon l'une quelconque des revendications 10 à 12, dans lequel l'étape de placement dans une atmosphère contenant de l'hydrogène de l'étape (2) est mise en oeuvre à une température se situant dans une plage de 0 à 50 °C pendant 0,1 à 10 heures.

14. Procédé de fabrication selon la revendication 10, dans lequel le refroidissement est réalisé de 750 à 500 °C à une vitesse de refroidissement de 10 à 20 °C/minute.
